# EUROPEAN PATENT APPLICATION

(11) **EP 2 239 311 A1**
(43) Date of publication of application: **13.10.2010**
(21) Application number: 08870033.1
(22) Date of filing: 13.10.2008
(51) Int. Cl.: C10B 57/04

(54) **METHOD FOR FORMING COAL MIXTURES FOR PRODUCING COKING BURDEN AND A COMPOSITION OF SAID MIXTURES**

(30) Priority: 09.01.2008 RU 2008100451
(71) Applicant: Musokhranov, Boris Anatolievich, Priozersk 188760 (RU)
(72) Inventor: Musokhranov, Boris Anatolievich, Priozersk 188760 (RU)
(74) Representative: Carpintero Lopez, Francisco
(86) International application number: PCT/RU2008/000651
(87) International publication number: WO 2009/088321

(57) **Abstract**

The invention relates to forming coal mixtures for producing furnace-size coke. The inventive method involves preparation the compositions of two-components mixtures of two types: the compositions of two types of highly coking and highly caking coals, substantially fatty coals used for producing enriching compositions, and the compositions of two types of medium coking and low caking coals, substantially carbonaceous coals for producing leaning compositions.

## Description

The invention relates to the by-product coke industry, particularly to forming burdens for producing blast-furnace coke.

A method of making up optimum coking burdens is disclosed in RU 2,088,634, C10B 57/04, G01 N 33/22, 27.08.1997. The known method comprises formulating burdens with different component contents, preparing a sample of each burden, and using a C grade coal sample as a reference burden. Each sample then is separately coked, ground and chromatographed, and the total mezovoid volume for the coke of each burden component is determined. The correspondence of a tested component to the optimal composition is indicated by the minimal deviation of the logarithm of the coke total mesovoid volume of the burden tested from the logarithm of coke total mesovoid volume of the reference burden.

Practical use of this known method is complicated, and the method is is time-consuming, though it allows to utilize an essential number of coal grades for preparing coal burdens with selected characteristics.

A method is known for preparing a burden for producing blast-furnace coke from technological species of coals such as fat coals, gas fat coals, coking low caking coals, carbonaceous (or leant) coking coals wherein sapromixite coal is used as a sintering additive, and wherein firstly the ash and pyrite sulfur content is reduced, and then ultra-fine grinding is performed to get 5-50 µm particles, then evenly mixed with other components adding an amount of power generating coals.

This method refers to a limited set of components (coals of G, GF, CLC, CaC grades) that does not allow to make up burden compositions with a broad range of components to be used at different by-product coke plants.

Moreover, the sintering additive requires special pre-treatment thereby complicating the burden forming process.

A method of preparing coal burdens for producing blast-furnace coke (US Patent No. 6,830,660, C10B 57/00, 57/04, 53/00, 14.12.2004) allows to operate the broadest set of components by forming mixtures from plurality of starting coals including medium coking coals of low, medium and medium-highly caking grade and highly coking coals of high and medium-highly caking grade. Coals having the reflection capacity, R₀, of 0.9-1.1 and the caking capacity of no less than 3.0 are considered as medium coking.

Thus high-quality cokes can be produced from coals of cheap available grades by forming mixtures of several coals selected from among an essential number of coal grades.

To prepare such burdens coal grades of precisely predefined properties (coking capacity, caking capacity etc.) should be used. But it is known that natural coals from even the same coalfields can vary widely as to their properties and quality. Accordingly burden components require complex technological treatment thereby considerably complicating the method of forming coking burdens from available coals.

The object of the provided method for producing coking burden is to develop differentiated mixture compositions that comply with specified requirements to get a high quality coke. Such differentiated compositions with predetermined properties formed as ready-made compositions from a broad range of natural coals will allow to considerably simplify a coking burden forming process.

A burden for blast-furnace coke production is disclosed in RU 2,305,122, C10B 57/04, 27.08.2007. Different versions of the burden are formed from a predetermined set of starting coals: fat, gas fat, coking low-caking and coking carbonaceous coals. The burden may have two-, three-and four-component composition that is selected individually in each case being represented by a required set of components for each specific application.

A limited set of starting components for forming differentiated burden compositions may be considered as a drawback of this burden. Two-component mixtures are difficult to achieve the desired parameter (R₀ or FSI), and multicomponent mixtures are technologically complex to be formed in coal preparation shops of by-product coke plants thereby considerably increasing the burden cost.

Thus an object of the new burden forming process is the simplification of the forming process to get high grade coke, development of differentiated compositions to form coking burdens.

The problem is solved by a method of preparing coal mixtures for producing coking burden, the method comprising preparing mixtures of a plurality of starting coals including medium coking low- and medium-caking coals, as well as highly coking highly caking coals, the method characterized by preparing two-component mixture compositions of two types: compositions of two highly coking substantially fatty (enriched) coals for producing enriching compositions, and compositions of two medium coking substantially carbonaceous (leant) coals for producing leaning compositions.

Enriching highly caking compositions include compositions comprising coals having the Free Swelling Index (FSI) of 5 or higher, and the vitrinite reflection capacity, R₀, of less than 1.15%.

Leaning low and medium caking compositions include compositions comprising coals having the Free Swelling Index (FSI) of 4.5 or lower, and the vitrinite reflection capacity, R₀, of more than 1.15%.

The task of forming the burden is solved in the following way.

An enriching coal mixture composition for producing blast-furnace coke burden from highly caking coals, wherein the composition comprises fat

(F) coals and gas (G) coals, with the following component percentage, by weight:
fat coals: 3-97;
gas coals: 3-97.

An enriching coal mixture composition for producing blast-furnace coke burden from highly caking coals, wherein the composition comprises fat (F) coals and gas fat (GF) coals, with the following component percentage, by weight:
fat coals: 3-97;
gas fat coals: 3-97.

An enriching coal mixture composition for producing blast-furnace coke burden from highly caking coals, wherein the composition comprises gas fat (GF) coals and gas (G) coals, with the following component percentage, by weight:
gas fat coals: 3-97;
gas coals: 3-97.

An enriching coal mixture composition for producing blast-furnace coke burden from highly caking coals, wherein the composition comprises gas fat carbonaceous (GFC) coals and gas fat (GF) coals or fat (F) coals, with the following component percentage, by weight:
gas fat carbonaceous coals: 3-97;
gas fat coals or fat coals: 3-97.

An enriching coal mixture composition for producing blast-furnace coke burden from highly caking coals, wherein the composition comprises gas fat carbonaceous (GFC) coals and gas (G) coals, with the following component percentage, by weight:
gas fat carbonaceous coals: 3-97;
gas coals: 3-97.

An enriching coal mixture composition for producing blast-furnace coke burden from highly caking coals, wherein the composition comprises coking fat (CF) coals and gas fat (GF) coals, with the following component percentage, by weight:
coking fat coals: 3-97;
gas fat coals: 3-97.

A leaning composition of a coal mixture for producing blast-furnace coke burden from medium caking coals wherein the composition comprises coking (C) coals and coking carbonaceous (CC) coals, with the following component percentage, by weight:
coking coals: 3-97;
coking carbonaceous coals: 3-97.

A leaning composition of a coal mixture for producing blast-furnace coke burden from medium caking coals wherein the composition comprises coking (C) coals and coking low caking (CLC) coals or coking low caking low metamorphosed (CLCLM) coals, with the following component percentage, by weight:
coking coals: 3-97;
coking low caking coals or coking low caking low metamorphosed coals: 3-97;

A leaning composition of a coal mixture for producing blast-furnace coke burden from medium caking coals wherein the composition comprises coking carbonaceous (CC) coals and coking low caking (CLC) coals or coking low caking low metamorphosed (CLCLM) coals, with the following component percentage, by weight:
coking carbonaceous coals: 3-97;
coking low caking coals or coking low caking low metamorphosed coals: 3-97.

A leaning composition of a coal mixture for producing blast-furnace coke burden from medium caking coals wherein the composition comprises lean caking (LC) coals and coking low caking (CLC) coals or coking low caking low metamorphosed (CLCLM) coals, with the following component percentage, by weight:
lean caking coals: 3-97;
coking low caking coals or coking low caking low metamorphosed coals: 3-97.

A leaning composition of a coal mixture for producing blast-furnace coke burden from medium caking coals wherein the composition comprises carbonaceous caking (CaC) coals and coking low caking (CLC) coals or coking low caking low metamorphosed (CLCLM) coals, with the following component percentage, by weight:
carbonaceous caking coals: 3-97;
coking low caking coals or coking low caking low metamorphosed coals: 3-97.

A leaning composition of a coal mixture for producing blast-furnace coke burden from medium caking coals wherein the composition comprises low caking (LoC) coals and coking carbonaceous (CC) coals or coking low caking (CLC) coals, with the following component percentage, by weight:
low caking coals: 3-97;
coking carbonaceous coals or coking low caking coals: 3-97.

A leaning composition of a coal mixture for producing blast-furnace coke burden from medium caking coals wherein the composition comprises coking (C) coals and lean caking (LC) coals, or carbonaceous caking (CaC) coals, or low caking (LoC) coals, with the following component percentage, by weight:
coking coals: 3-97;
lean caking coals, or carbonaceous caking coals, or low caking coals: 3-97.

Leaning coals are known to reduce shrinking property of the burden. Adding thereof to the burden reduces coke jointing and increases coke size. But their insufficient caking capacity may result in the increased coke abrasion, irregular sizes of coke pieces and degraded coke quality.

Moreover carbonaceous coals produce a small amount of liquid phase insufficient to involve grain mixtures of these coals into caking process. Burden of optimal caking capacity should produce an amount of liquid phase sufficient to wet grain surface of the whole coked mass.

If there is little liquid phase then caking capacity of the burden is insufficient, and such burden is considered as a leant one. If burden has excessive caking capacity, i.e. it is enriched, then leaning components can be added to the burden (R.E. Leibovich. Cake and by-product process production engineering. - M. 1982 p. 55). Hence it is possible to optimally average the component content to provide for uniformity of the coal burden quality.

All enriching components for the coal burden possess a great caking capacity reserve allowing a sufficiently broad variation of the content thereof in the burden without degrading the overall caking capacity (Yu.S. Kaftan et al. Development of differential compositions for cake-oven battery with oven chambers of different volumes. Journal "Coke and chemistry", 1990, 11).

In the proposed compositions the component content varies in the range of 3 to 97 weight percent, with the leaning component content varying accordingly.

Since complex characteristics are subject to the additivity rule in mixtures, they are used to develop differentiated burden compositions with prescribed R₀ and FSI values.

The burden composition is determined by determining an optimal combination of the Free Swelling Index, FSI (or plastic layer thickness, Y) and the vitrinite reflection capacity, R₀ (or volatile matter yield, V), that is necessary to produce the coke of high quality.

In case when well-caking (enriched) components prevail in the burden, an essential amount of free-running products is formed, having low viscosity (FSI of 6 to 8, R₀ of 0.8 to 1.1 %). In this case the coke will be heavily swollen, highly reactive, with large voids and low mechanical strength. In case when low caking (leaning) components prevail in the burden (FSI of 1-4, R₀ of 1.20 to 2.00%) this will result in the lowly swollen coke with very small voids. Such coke has low mechanical strength and very low reactivity.

In order to ensure optimal volume and viscosity values of the free-running products, FSI of the coal mixture to be coked should be 5 (the plastic layer thickness should be 15 mm), and the vitrinite reflection capacity should be 1,15% (the volatile matter yield should be about 30%). These parameters correspond to the high quality C-grade coals that can yield good coke without additives. However resources of such coals are already very poor. For a coal mixture to have the quality parameters approaching those of C grade coals it should contain several caking and leaning coals. To simplify the burden forming process it is advisable to prepare in advance two groups of components, i.e. highly caking (enriched, i.e. rich in coals of F, G, GF, CF grades) and low caking (leant, i.e. rich in coals of CC, LoC, CaC, LC grades).

Enriched components should have FSI of no less than 5 (the plastic layer thickness of more than 15 mm) and R₀ up to 1.15%. Leant components should have FSI up to 4,5 (the plastic layer thickness up to 14 mm) and R₀ of more than 1.15%. When components having such properties are mixed with each other or with individual coals, burdens are obtained having with optimal properties.

Coking burdens can be formed by two compositions, enriched one and leant one, as well as by several components including an enriched composition and individual carbonaceous coals, or a leant composition and individual enriched coals. The burden enriched component content may vary from 20 to 80%, and the leant components may vary from 5 to 70% (of the total burden weight). Examples of coking burdens having the predetermined quality and containing various enriched and leant compositions are provided below.
1. Burden for producing blast-furnace coke, containing an enriched composition according to Example 1 of the Table and coking carbonaceous coals, having the following component percentage, by weight:
   enriched composition (according to Example 1) - 40
   coking carbonaceous coal - 60.
2. Burden for producing blast-furnace coke, containing an enriched composition according to Example 7 of the Table, mixed with coking carbonaceous coal and lean caking coal, having the following component percentage, by weight:
   enriched composition - 40;
   coking carbonaceous coal - 35;
   lean caking coal - 25.
3. Burden for producing blast-furnace coke, containing a leant composition according to Example 40 of the Table and fat coal, having the following component percentage, by weight:
   leant composition - 60;
   fat coal - 40.
4. Burden for producing blast-furnace coke, containing a leant composition according to Example 43 of the Table and gas fat coal, having the following component percentage, by weight:
   leant composition - 60;
   gas fat coal - 40.
5. Burden for producing blast-furnace coke, containing a leant composition according to Example 46 of the Table and an enriched component according to Example 4 of the Table, having the following component percentage, by weight:
   leant composition - 40;
   enriched composition - 60.

An example of forming a burden mixture from enriched and leant compositions. An enriched composition for the coking burden is prepared from run-of-mine G grade coals mined at the "Yubileinaya" and "Osinnikovskaya" collieries, and run-of-mine GF grade coal mined at the "Yesaulskaya" colliery. The run-of-mine coals are enriched at the "Kuznetskaya" Central Concentrating Mill, obtaining a composition mixture with the GF to F ratio of 30:70. The resulting enriching burden composition has the vitrinite reflection capacity of 1.00%, the free swelling index of 7, the plastic layer thickness of 19 mm; the composition is therefore suitable for coking in a mixture with a leant composition or concentrates of low caking coals possessing high vitrinite reflection capacity.

A leant burden composition is prepared from run-of-mine CC grade coals mined at the "Novobachatsky" opencast colliery and run-of-mine CLC grade coal mined at the "Krasnobrodsky" opencast colliery. The run-of-mine coals are enriched at the "Berezovskaya" Central Concentrating Mill obtaining a composition mixture with the CC to CLC ratio of 30:70 ratio. The resulting leant burden composition has the vitrinite reflection capacity of 1.29%, the free swelling index of 3, and the plastic layer thickness of 9 mm.

A mixture of the resulting leant and the resulting enriched compositions is suitable for preparing conditioned coking burden. The ratio of the leant composition to the enriched composition in the burden depends on the coke-oven battery type and can vary. For example, a 50:50 ratio provides burden with the free swelling index of 5, the reflection capacity of 1.10% and the plastic layer thickness of 16 mm; a 40:60 ratio of the leant composition to the enriched composition in the burden, respectively, provides burden with the free swelling index of 6, the reflection capacity of 1.00% and the plastic layer thickness of 17 mm. The former burden is better suitable for narrow chamber coke-oven batteries, while the latter one - for wide-chamber coke-oven batteries.

The following Table presents other examples of mixtures formed in the same manner, with amounts of the components according to various embodiments.

**Table 1. Examples of compositions**

| **Composition No** | **Coal content** | | | | | |
|---|---|---|---|---|---|---|
| | **Grade** | **Percentage** | **Grade** | **Percentage** | **FSI** | **R°, %** |
| ***Enriching compositions*** | | | | | | |
| 1. | F | 97 | G | 3 | 8 ½ | 0.9 |
| 2. | F | 50 | G | 50 | 7 ½ | 0.8 |
| 3. | F | 3 | G | 97 | 5 | 0.7 |
| 4. | F | 97 | GF | 3 | 8 | 0.95 |
| 5. | F | 50 | GF | 50 | 8 ½ | 0.85 |
| 6. | F | 3 | GF | 97 | 9 | 0.8 |
| 7. | GF | 97 | G | 3 | 8 ½ | 0.8 |
| 8. | GF | 75 | G | 25 | 6 ½ | 0.75 |
| 9. | GF | 3 | G | 97 | 5 | 0.7 |
| 10. | GFC | 97 | GF | 3 | 6 | 0.75 |
| 11. | GFC | 50 | GF | 50 | 7 ½ | 0.8 |
| 12. | GFC | 3 | GF | 97 | 8 ½ | 0.85 |
| 13. | GFC | 97 | F | 3 | 6 | 0.75 |
| 14. | GFC | 50 | F | 50 | 7 ½ | 0.8 |
| 15. | GFC | 3 | F | 97 | 8 ½ | 0.85 |
| 16. | GFC | 97 | G | 3 | 6 | 0.75 |
| 17. | GFC | 30 | G | 70 | 5 ½ | 0.7 |
| 18. | GFC | 3 | G | 97 | 5 | 0.7 |
| 19. | CF | 97 | GF | 3 | 9 | 1.1 |
| 20. | CF | 50 | GF | 50 | 8 | 1 |
| 21. | CF | 3 | GF | 97 | 7 | 0.9 |
| 22. | CF | 97 | F | 3 | 9 | 1.1 |
| 23. | CF | 50 | F | 50 | 8 | 1 |
| 24. | CF | 3 | F | 97 | 7 | 0.9 |
| ***Leaning compositions*** | | | | | | |
| 25. | C | 97 | CC | 3 | 5 | 1.2 |
| 26. | C | 50 | CC | 50 | 4 | 1.25 |
| 27. | C | 3 | CC | 97 | 3 | 1.3 |
| 28. | C | 97 | CLC | 3 | 4 ½ | 1.2 |
| 29. | C | 40 | CLC | 60 | 4 | 1.35 |
| 30. | C | 3 | CLC | 97 | 3 | 1.45 |
| 31. | CC | 97 | CLC | 3 | 4 | 1.35 |
| 32. | CC | 50 | CLC | 50 | 3 ½ | 1.4 |
| 33. | CC | 3 | CLC | 97 | 3 | 1.45 |
| 34. | LC | 97 | CLC | 3 | 1 | 1.6 |
| 35. | LC | 50 | CLC | 50 | 2 | 1.55 |
| 36. | LC | 3 | CLC | 97 | 3 | 1.5 |
| 37. | CaC | 97 | CLC | 3 | 4 ½ | 1.5 |
| 38. | CaC | 45 | CLC | 55 | 3 ½ | 1.5 |
| 39. | CaC | 3 | CLC | 97 | 2 | 1.5 |
| 40. | C | 97 | CLCLM | 3 | 4 ½ | 1.2 |
| 41. | C | 50 | CLCLM | 50 | 4 | 1.15 |
| 42. | C | 3 | CLCLM | 97 | 3 | 1 |
| 43. | CC | 97 | CLCLM | 3 | 4 | 1.35 |
| 44. | CC | 50 | CLCLM | 50 | 3 ½ | 1.25 |
| 45. | CC | 3 | CLCLM | 97 | 3 | 1.1 |
| 46. | LC | 97 | CLCLM | 3 | 1 | 1.6 |
| 47. | LC | 50 | CLCLM | 50 | 2 | 1.25 |
| 48. | LC | 3 | CLCLM | 97 | 3 | 1.1 |
| 49. | CaC | 97 | CLCLM | 3 | 4½ | 1.5 |
| 50. | CaC | 50 | CLCLM | 50 | 3½ | 1.2 |
| 51. | CaC | 3 | CLCLM | 97 | 2 | 1.1 |
| 52. | LoC | 97 | CC | 3 | 1 | 1.5 |
| 53. | LoC | 35 | CC | 65 | 1 ½ | 1.45 |
| 54. | LoC | 3 | CC | 97 | 2 | 1.4 |
| 55. | LoC | 97 | CLC | 3 | 1 | 1.5 |
| 56. | LoC | 50 | CLC | 50 | 1½ | 1.55 |
| 57. | LoC | 3 | CLC | 97 | 2 | 1.6 |
| 58. | C | 97 | LC | 3 | 5½ | 1.2 |
| 59. | C | 50 | LC | 50 | 4 | 1.4 |
| 60. | C | 3 | LC | 97 | 3 | 1.55 |
| 61. | C | 97 | CaC | 3 | 5½ | 1.2 |
| 62. | C | 50 | CaC | 50 | 4 | 1.4 |
| 63. | C | 3 | CaC | 97 | 3 | 1.55 |
| 64. | C | 97 | LoC | 3 | 5½ | 1.2 |
| 65. | C | 50 | LoC | 50 | 4 | 1.4 |
| 66. | C | 3 | LoC | 97 | 3 | 1.55 |

**Table 2. Examples of burden composed of two compositions**

| **No.** | **Burden component content** | | | | | |
|---|---|---|---|---|---|---|
| | **F+G composition (Example 1)** | **Percentage** | **C+CLCLM composition (Example 40)** | **Percentage** | **FSI** | **R°, %** |
| 1 | Enriched | 97 | Leant | 3 | 7 | 1.00 |
| 2 | Enriched | 50 | Leant | 50 | 6 | 1.15 |
| 3 | Enriched | 3 | Leant | 97 | 5 | 1.25 |

## Claims

**1.** A method of preparing coal mixtures for producing coking burden, the method comprising preparing mixtures from a plurality of starting coals including medium coking low- and medium-caking coals, as well as highly coking highly caking coals, the method **characterized by** preparing two-component mixture compositions of two types: compositions of two highly coking substantially fatty coals for producing enriching compositions, and compositions of two medium coking substantially carbonaceous coals for producing leaning compositions.

**2.** The method according to Claim 1, wherein enriching highly caking compositions include compositions comprising coals having the Free Swelling Index (FSI) of 5 or higher, and the vitrinite reflection capacity, R₀, of less than 1.15%.

**3.** The method according to Claim 1, wherein leaning low and medium caking compositions include compositions comprising coals having the Free Swelling Index (FSI) of 4.5 or lower, and the vitrinite reflection capacity, R₀, of more than 1.15%.

**4.** An enriching coal mixture composition for producing blast-furnace coke burden from highly caking coals, wherein the composition comprises fat coals and gas coals, with the following component percentage, by weight:
fat coals: 3-97;
wherein the composition comprises fat coals and gas fat coals, with the following component percentage, by weight:
fat coals: 3-97;
gas fat coals: 3-97.

**6.** An enriching coal mixture composition for producing blast-furnace coke burden from highly caking coals, wherein the composition comprises gas fat coals and gas coals, with the following component percentage, by weight:
gas fat coals: 3-97;
gas coals: 3-97.

**7.** An enriching coal mixture composition for producing blast-furnace coke burden from highly caking coals, wherein the composition comprises gas fat carbonaceous coals and gas fat coals or fat coals, with the following component percentage, by weight:
gas fat carbonaceous coals: 3-97;
gas fat coals or fat coals: 3-97.

**8.** An enriching coal mixture composition for producing blast-furnace coke burden from highly caking coals, wherein the composition comprises gas fat carbonaceous coals and gas coals, with the following component percentage, by weight:
gas fat carbonaceous coals: 3-97;
gas coals: 3-97.

**9.** An enriching coal mixture composition for producing blast-furnace coke burden from highly caking coals, wherein the composition comprises coking fat coals and gas fat coals, with the following component percentage, by weight:
coking fat coals: 3-97;
gas fat coals: 3-97.

**10.** A leaning composition of a coal mixture for producing blast-furnace coke burden from medium caking coals wherein the composition comprises coking coals and coking carbonaceous coals, with the following component percentage, by weight:
coking coals: 3-97;
coking carbonaceous coals: 3-97.

**11.** A leaning composition of a coal mixture for producing blast-furnace coke burden from medium caking coals wherein the composition comprises coking coals and coking low caking coals or coking low caking low metamorphosed coals, with the following component percentage, by weight:
coking coals: 3-97;
coking low caking coals or coking low caking low metamorphosed coals: 3-97.

**12.** A leaning composition of a coal mixture for producing blast-furnace coke burden from medium caking coals wherein the composition comprises coking carbonaceous coals and coking low caking coals or coking low caking low metamorphosed coals, with the following component percentage, by weight:
coking carbonaceous coals: 3-97;
coking low caking coals or coking low caking low metamorphosed coals: 3-97.

**13.** A leaning composition of a coal mixture for producing blast-furnace coke burden from medium caking coals wherein the composition comprises lean caking coals and coking low caking coals or coking low caking low metamorphosed coals, with the following component percentage, by weight:
lean caking coals: 3-97;
coking low caking coals or coking low caking low metamorphosed coals: 3-97.

**14.** A leaning composition of a coal mixture for producing blast-furnace coke burden from medium caking coals wherein the composition comprises carbonaceous caking coals and coking low caking coals or coking low caking low metamorphosed coals, with the following component percentage, by weight:
carbonaceous caking coals: 3-97;
coking low caking coals or coking low caking low metamorphosed coals: 3-97.

**15.** A leaning composition of a coal mixture for producing blast-furnace coke burden from medium caking coals wherein the composition comprises low caking coals and coking carbonaceous coals or coking low caking coals, with the following component percentage, by weight:
low caking coals: 3-97;
coking carbonaceous coals or coking low caking coals: 3-97.

**16.** A leaning composition of a coal mixture for producing blast-furnace coke burden from medium caking coals wherein the composition comprises coking coals and lean caking coals, or carbonaceous caking coals, or low caking coals, with the following component percentage, by weight:
coking coals: 3-97;
lean caking coals, or carbonaceous caking coals, or low caking coals: 3-97.
